# EUROPEAN PATENT APPLICATION

(11) **EP 3 901 941 A1**
(43) Date of publication of application: **27.10.2021**
(21) Application number: 21151566.3
(22) Date of filing: 14.01.2021
(51) Int. Cl.: G09G 3/20, G09G 5/10

(54) **SCREEN DISPLAY ADJUSTING METHOD, APPARATUS AND STORAGE MEDIUM**

(30) Priority: 23.04.2020 CN 202010327130
(71) Applicant: Beijing Xiaomi Mobile Software Co., Ltd., Beijing 100085 (CN)
(72) Inventor: CHEN, Xu, Beijing, Beijing 100085 (CN); MO, Changming, Beijing, Beijing 100085 (CN)
(74) Representative: dompatent von Kreisler Selting Werner - Partnerschaft von Patent- und Rechtsanwälten mbB

(57) **Abstract**

A screen display adjusting method, applied to a terminal, includes: adding a mask layer in response to that a dark mode of the terminal is turned on; and adjusting a screen display brightness of the terminal by adjusting a display transparency of the mask layer. As such, the real-time adjustment of the screen display brightness is realized, and the real-time adjustment of the screen display brightness can be more automatic.

## Description

### BACKGROUND

With the development of the screen display technologies, brightness and contrast of a display screen can have a larger dynamic range. A dark mode can be adopted in mobile terminals. The dark mode can not only save power for mobile terminal devices, but also adjust the contrast of the display in a dark light environment to alleviate visual effects such as glare, etc. caused by the display brightness of the mobile terminal devices.

### SUMMARY

The present disclosure relates generally to the field of screen display technologies, and more specifically to a screen display adjusting method, apparatus and a storage medium.

According to a first aspect of the present disclosure, there is provided a screen display adjusting method, which is applied to a terminal, including the following steps:
adding a mask layer, in response to that a dark mode of the terminal is turned on; and adjusting a screen display brightness of the terminal by adjusting a display transparency of the mask layer.

In some embodiments, the step of adjusting a display transparency of the mask layer includes:
determining illumination brightness, and determining the display transparency of the mask layer based on the illumination brightness.

In some embodiments, the step of determining the display transparency of the mask layer based on the illumination brightness includes:
determining a display transparency of the mask layer corresponding to the illumination brightness based on a corresponding relationship curve between the illumination brightness and the display transparency of the mask layer.

In some embodiments, the step of determining a display transparency of the mask layer corresponding to the illumination brightness, based on a corresponding relationship curve between the illumination brightness and the display transparency of the mask layer includes:
determining a coordinate value of a point of the illumination brightness on the corresponding relationship curve based on the corresponding relationship curve; and
determining a coordinate value of a corresponding display transparency of a mask layer according to a coordinate value of a point of the illumination brightness on a corresponding relationship curve, a coordinate value of the display transparency of the mask layer being a display transparency of a mask layer.

In some embodiments, the determination of a corresponding relationship curve includes:
determining a corresponding display transparency of the mask layer when the illumination brightness is 0, and determining a corresponding illumination brightness when a display transparency of the mask layer is 0; and
establishing a coordinate system, and determining a corresponding relationship curve between the illumination brightness and a display transparency of the mask layer in a coordinate system according to a corresponding display transparency of the mask layer when the illumination brightness is 0 and a corresponding illumination brightness when a display transparency of the mask layer is 0.

In some embodiments, the method further includes:
removing the mask layer in response to an operation instruction to turn off the dark mode if the illumination brightness exceeds a predetermined illumination brightness threshold.

In some embodiments, the method further includes:
adjusting a brightness of a text based on a transparency of the mask layer if the text is displayed on a current interface of the terminal.

According to a second aspect of the present disclosure, there is provided a device for adjusting screen display, which is applied to a terminal, including:
an adding module configured to add a mask layer in response to that a dark mode of the terminal is turned on; and an adjusting module configured to adjust a screen display brightness of the terminal by adjusting the display transparency of the mask layer.

In some embodiments, the adjusting module is configured to:
determine illumination brightness, and determine the display transparency of the mask layer according to the illumination brightness.

In some embodiments, the adjusting module determines a display transparency of a mask layer in the following manner:
determining a display transparency of the mask layer corresponding to the illumination brightness, based on a corresponding relationship curve between the illumination brightness and the display transparency of the mask layer.

In some embodiments, the adjusting module is configured to:
determine a coordinate value of a point of the illumination brightness on a corresponding relationship curve based on the corresponding relationship curve; and determine a coordinate value of a corresponding display transparency of a mask layer according to a coordinate value of a point of the illumination brightness on the corresponding relationship curve, the coordinate value of the display transparency of the mask layer being a display transparency of the mask layer.

In some embodiments, the adjusting module is further configured to:
determine a corresponding display transparency of the mask layer when the illumination brightness is 0, and determine a corresponding illumination brightness when a display transparency of the mask layer is 0; and establish a coordinate system, and determine a corresponding relationship curve between the illumination brightness and the display transparency of the mask layer in the coordinate system according to a corresponding display transparency of the mask layer when the illumination brightness is 0 and a corresponding illumination brightness when a display transparency of the mask layer is 0.

In some embodiments, the adding module is further configured to:
remove the mask layer in response to an operation instruction to turn off a dark mode if the illumination brightness exceeds a predetermined illumination brightness threshold.

In some embodiments, the adjusting module is further configured to:
adjust a brightness of a text based on a transparency of the mask layer if the text is displayed on a current interface of the terminal.

According to a third aspect of the present disclosure, there is provided a device for adjusting screen display, including:
a processor; and a memory for storing instructions executable by the processor, wherein, the processor is configured to: execute the method for adjusting screen display according to the first aspect or any one of the implementations of the first aspect.

According to a fourth aspect of the present disclosure, there is provided a non-transitory computer-readable storage medium, wherein when instructions in the storage medium are executed by a processor of a network device, an electronic device is enabled to execute the method for adjusting screen display according to the first aspect or any one of the implementations of the first aspect.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this disclosure, illustrate embodiments consistent with the present disclosure and, together with the description, serve to explain the principles of the present disclosure.
FIG. 1 is a flowchart illustrating a screen display adjusting method according to some embodiments.
FIG.2 is a schematic diagram illustrating the adding a mask layer of a screen display adjusting method according to some embodiments.
FIG. 3 is a flowchart illustrating screen display adjusting method according to some embodiments.
FIG. 4 is a flowchart illustrating a screen display adjusting method according to some embodiments.
FIG. 5 is a schematic diagram illustrating a corresponding relationship curve in a screen display adjusting method according to some embodiments.
FIG. 6 is a block diagram illustrating a screen display adjusting apparatus according to some embodiments.
FIG. 7 is a block diagram illustrating a device according to some embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following exemplary embodiments do not represent all implementations consistent with the present disclosure. Instead, they are merely examples of devices and methods consistent with aspects related to the present disclosure as recited in the appended claims.

In a typical dark mode, the display effect of the dark mode is global dark display. After the dark mode is used by the users, the display brightness in the dark mode is still high due to the screen display effects of the active matrix organic light emitting diode (AMOLED) screen, which can have AMOLED materials as primary materials.

Various embodiments of the present disclosure provide a screen display adjusting method, wherein a mask layer is added in the dark mode, and the screen display brightness of the mobile terminal is adjusted by adjusting the display transparency of the mask layer, which solves the problem that only the dark color is displayed and cannot be adjusted with the illumination brightness in the dark mode of the mobile terminal, such that the display effect of the dark mode can be adjusted in real time according to the illumination brightness of the environment.

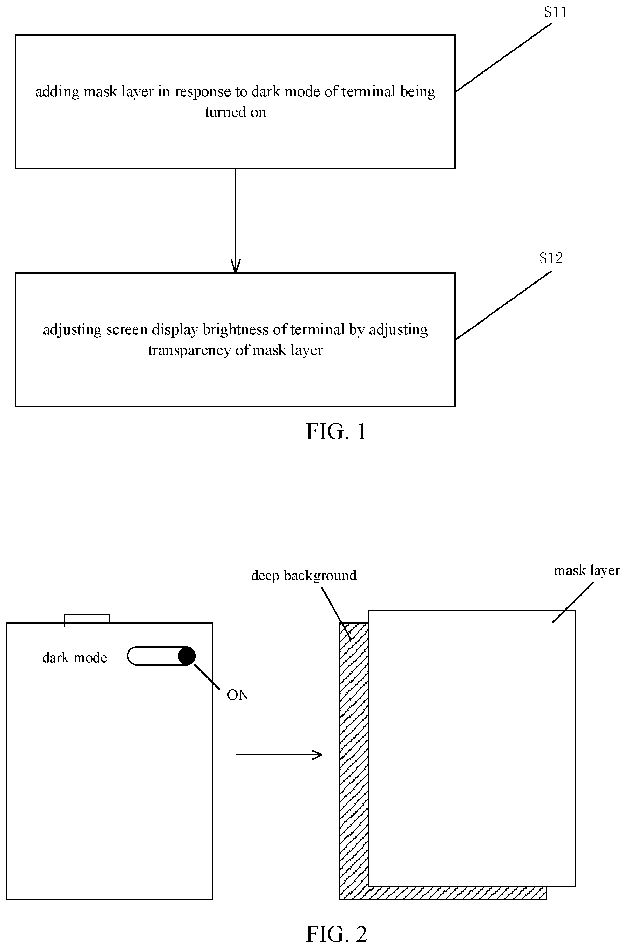

FIG. 1 is a flowchart illustrating a screen display adjusting method according to some embodiments. As shown in FIG. 1, the screen display adjusting method is applied in a terminal, and includes the following steps.

In step S11, a mask layer is added in response to that a dark mode of the terminal is turned on.

In step S12, a screen display brightness of the terminal is adjusted by adjusting a display transparency of the mask layer.

The mobile terminal detects the operation instruction for turning on the dark mode and responds to the operation instruction for turning on the dark mode. After the dark mode takes effect, the text, pictures and controls of the current display interface are acquired, and the foreground and background images are further distinguished, and a dark display is performed on the acquired text, pictures, controls, and foreground and background images of the current display interface. Based on the dark display of the current interface, the mobile terminal system adds a mask layer on the basis of the dark display. As shown in FIG. 2. The mobile terminal adjusts the display transparency of the mask layer, and further controls and adjusts the screen display brightness of the mobile terminal, in response to the operation instruction for turning on the dark mode.

In the screen display adjusting method described above, by adjusting the display transparency of the mask layer and further controlling and adjusting the screen display brightness of the mobile terminal, the real-time and intelligibility of the screen display effect in the dark mode are increased.

In some embodiments, after responding to the turning on of the dark mode, the mobile terminal acquires the illumination brightness of the surrounding environment and determines the illumination brightness. After determining the illumination brightness, a corresponding relationship curve between the illumination brightness and the display transparency of the mask layer is acquired. The display transparency of the mask layer corresponding to the illumination brightness is determined according to the corresponding relationship curve, and the determined display transparency of the mask layer is used as the display transparency of the mask layer.

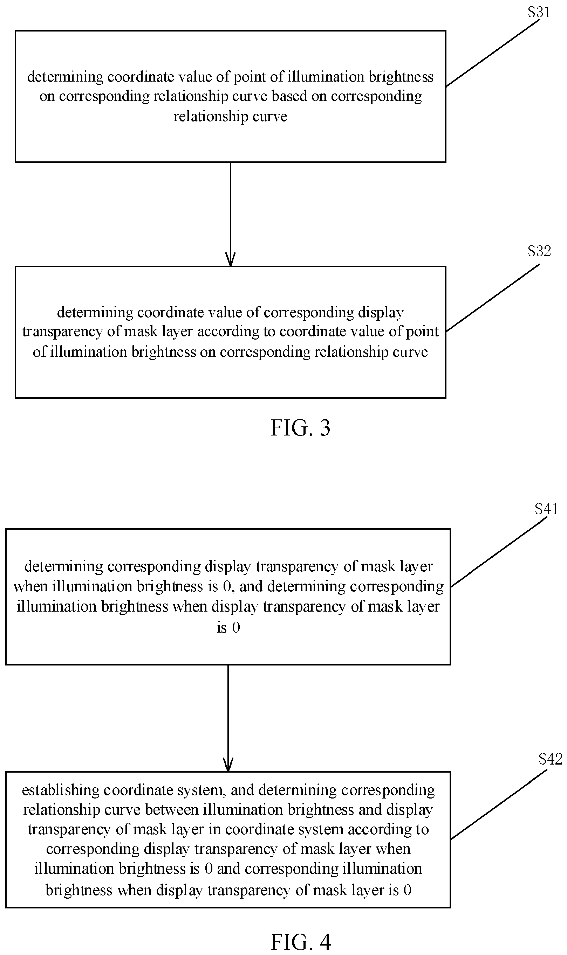

FIG. 3 is a flowchart illustrating a screen display adjusting method according to some embodiments. As shown in FIG. 3, determining a display transparency of a mask layer corresponding to the illumination brightness includes a step S31 and a step S32.

In step S31, a coordinate value of a point of the illumination brightness on a corresponding relationship curve is determined, based on the corresponding relationship curve.

In step S32, a coordinate value of a corresponding display transparency of a mask layer is determined, according to a coordinate value of a point of the illumination brightness on a corresponding relationship curve, and a coordinate value of the display transparency of the mask layer is the display transparency of the mask layer.

The corresponding relationship curve and the coordinate system where the corresponding relationship curve is located are acquired. The present disclosure adopts a planar two-dimensional coordinate system, and the coordinate axes are the illumination brightness and the transparency of the mask layer, respectively. The point of the illumination brightness on the corresponding relationship curve and the coordinate value of the transparency of the mask layer corresponding to the point are determined, according to the coordinate value of the illumination brightness in the coordinate system. The determined coordinate value of the transparency of the mask layer is the display transparency of the mask layer.

FIG. 4 is a flowchart illustrating a screen display adjusting method according to some embodiments. As shown in FIG. 4, determining the corresponding relationship curve includes a step S41 and a step S42.

In step S41, a corresponding display transparency of the mask layer when the illumination brightness is 0, and determining the corresponding illumination brightness when a display transparency of the mask layer is 0.

In step S42, a coordinate system is established, and a corresponding relationship curve between the illumination brightness and the display transparency of the mask layer in a coordinate system is determined according to the corresponding display transparency of the mask layer when the illumination brightness is 0 and the corresponding illumination brightness when a display transparency of a mask layer is 0.

According to the screen display brightness of the mobile terminal, the corresponding display transparency of the mask layer when the illumination brightness is 0 and the corresponding illumination brightness when the display transparency of the mask layer is 0 are determined. A coordinate system is established with the display transparency of the mask layer as the abscissa and the illumination brightness as the ordinate. According to the change trend that the display transparency of the mask layer changes as the illumination brightness changes, the corresponding relationship curve between the illumination brightness and the display transparency of the mask layer is determined. The corresponding relationship curve is placed in the established coordinate system. The corresponding relationship curve between the illumination brightness and the display transparency of the mask layer in the coordinate system is determined.

The corresponding relationship curve between the illumination brightness and the display transparency of the mask layer in the coordinate system is further described by adopting the following embodiments in present disclosure.

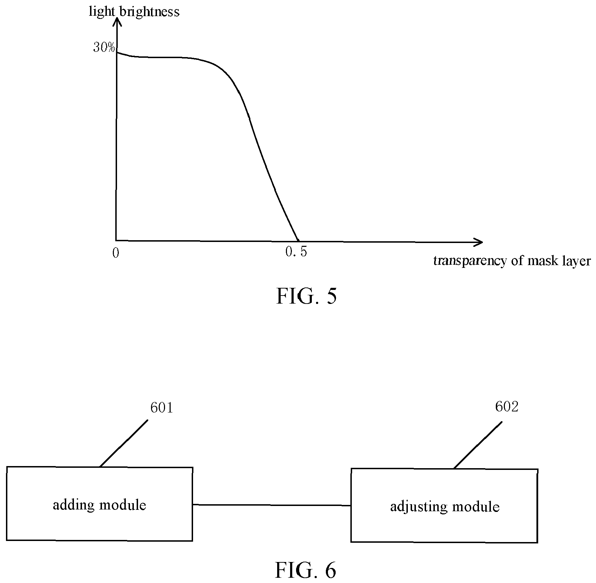

A point at which the illumination brightness is 0 and the display transparency of the mask layer is 0.5 is set as an intersection of the corresponding relationship curve and the display transparency of the mask layer of the abscissa, and a point at which the display transparency of the mask layer is 0 and the illumination brightness is 30% is set as an intersection of corresponding relationship curve and the illumination brightness of the ordinate to draw the corresponding relationship curve, as shown in FIG. 5. In the corresponding relationship curve, the display transparency of the mask layer corresponding to the illumination brightness can be determined according to the determined illumination brightness.

In some embodiments, the illumination brightness threshold is set, and if the acquired illumination brightness exceeds the set illumination brightness threshold, the mobile terminal removes the mask layer in response to an operation instruction for turning off the dark mode. The screen display of the mobile terminal is displayed according to the normal mode.

If there displays the text on the current interface during the mobile terminal applies the dark mode, the brightness of the text is further adjusted according to the determined display transparency of the mask layer. The brightness of text displayed on the current interface can be further controlled following the change of the illumination brightness.

In the screen display adjusting method described above, the brightness of the text is adjusted according to the display transparency of the mask layer, which improves the user's reading effect on the text.

Based on the similar concept, the embodiments of the present disclosure also provide a screen display adjusting apparatus.

It can be understood that, in order to implement the above functions, the screen display adjusting apparatus provided by the embodiments of the present disclosure includes a corresponding hardware structure and/or software module for executing each function. In combination with the units and algorithm steps of the respective examples disclosed in the embodiments of the present disclosure, the embodiments of the present disclosure can be implemented in the form of hardware or a combination of hardware and computer software. Whether a function is executed by the hardware or a method of driving the hardware by the computer software depends on the specific application and design constraints of the technical solution. A person skilled in the art may use different methods to implement the described functions for each specific application, but such implementation should not be considered to exceed the scope of the technical solutions of the embodiments of the present disclosure.

FIG. 6 is a block diagram illustrating a screen display adjusting apparatus according to some embodiments. Referring to FIG. 6, the apparatus includes an adding module 601 and an adjusting module 602.

The adding module 601 is configured to add a mask layer in response to that a dark mode of the terminal is turned on. The adjusting module 602 is configured to adjust a screen display brightness of the terminal by adjusting the display transparency of the mask layer.

The adjusting module 602 is configured to determine the illumination brightness, and determine the display transparency of the mask layer according to the illumination brightness.

The adjusting module determines a display transparency of a mask layer in the following manner:

determining a display transparency of the mask layer corresponding to the illumination brightness based on a corresponding relationship curve between the illumination brightness and the display transparency of the mask layer.

The adjusting module 602 is configured to determine a coordinate value of a point of the illumination brightness on the corresponding relationship curve based on the corresponding relationship curve; and determine a coordinate value of the corresponding display transparency of the mask layer according to the coordinate value of the point of the illumination brightness on the corresponding relationship curve, the coordinate value of the display transparency of the mask layer being the display transparency of the mask layer.

The adjusting module 602 is further configured to determine the corresponding display transparency of the mask layer when the illumination brightness is 0, and determine the corresponding illumination brightness when the display transparency of the mask layer is 0; and establish a coordinate system, and determine a corresponding relationship curve between the illumination brightness and the display transparency of the mask layer in the coordinate system according to the corresponding display transparency of a mask layer when the illumination brightness is 0 and the corresponding illumination brightness when the display transparency of the mask layer is 0.

The adding module 601 is further configured to remove the mask layer in response to an operation instruction for turning off a dark mode if the illumination brightness exceeds a predetermined illumination brightness threshold.

The adjusting module 602 is further configured to adjust a brightness of a text based on the transparency of the mask layer if the text is displayed on a current interface of the terminal.

With respect to the apparatus in the above embodiments, the specific implementations for performing operations by individual modules therein have been described in detail in the embodiments regarding the methods, which will not be elaborated herein.

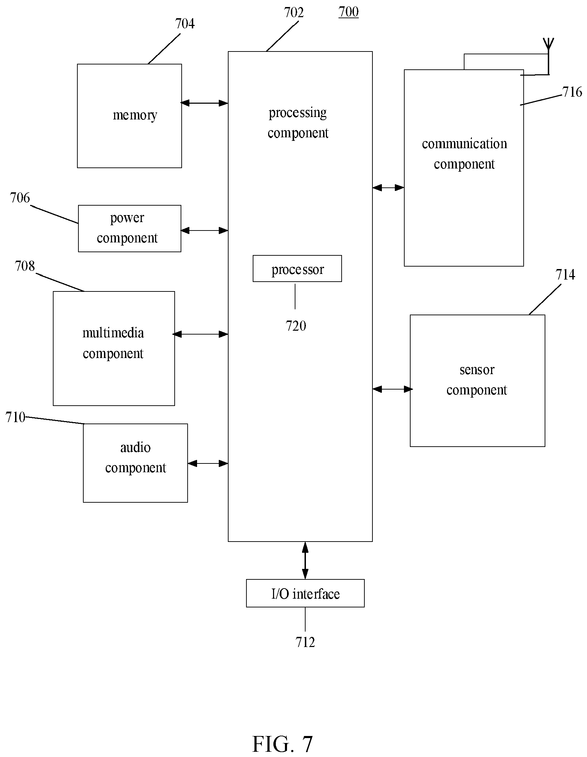

FIG. 7 is a block diagram illustrating a device 700 for adjusting screen display according to some embodiments. For example, the device 700 can be a mobile phone, a computer, a digital broadcast terminal, a messaging device, a gaming console, a tablet, a medical device, exercise equipment, a personal digital assistant, and the like.

Referring to FIG. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to implement all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, videos, etc. The memory 704 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 supplies power to various components of the device 700. The power component 706 may include a power management system, one or more power sources, and any other components associated with the generation, management, and distribution of power in the device 700.

The multimedia component 708 includes a screen providing an output interface between the device 700 and a user. In some embodiments, the screen may include a liquid crystal display (LCD) and a touch panel (TP). In some embodiments, organic light-emitting diode (OLED) displays can be employed.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 708 includes a front camera and/or a rear camera. The front camera and/or the rear camera can receive external multimedia data while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. The received audio signal can be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 can detect an on/off status of the device 700, relative positioning of components, e.g., the display and a keypad, of the device 700, the sensor component 714 can also detect a change in position of the device 700 or one component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 can also include an accelerometer sensor, a gyroscope sensor, a magnetic sensor, a pressure sensor, or a temperature sensor.

The communication component 716 is configured to facilitate wired or wireless communication between the device 700 and other devices. The device 700 can access a wireless network based on a communication standard, such as Wi-Fi, 2G, 3G, 4G, or 5G, or a combination thereof. In some embodiments, the communication component 716 can receive a broadcast signal or broadcast associated information from an external broadcast management system via a broadcast channel. In one exemplary embodiment, the communication component 716 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In some embodiments , the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as the memory 704 including the instructions executable by the processor 720 in the device 700, for performing the above-described methods. For example, the non-transitory computer-readable storage medium can be a ROM, a random-access memory (RAM), a CD-ROM, a magnetic tape, a floppy disc, an optical data storage device, and the like.

The various embodiments of the present disclosure can have one or more of the following advantages.

By adding a mask layer in the dark mode, the display transparency of the added mask layer can be adjusted, and the screen display brightness can be further controlled, such that the real-time adjustment of the screen display brightness is realized, and the real-time adjustment intelligence of the screen display brightness is improved.

In some implementations, the mask layer can be realized with further control of the AMOLED display screen beyond a normal mode of operation of the AMOLED display screen. For example, The AMOLED display screen can have the normal mode of operation with pixel brightness controlled within a first dynamic range. By adding the mask layer, for example through software control, and/or a control module or circuit, the first dynamic range of the normal operation of the AMOLED display screen pixel brightness can be further controlled to a second dynamic range, with a lower limit of the second dynamic range lower than the first dynamic range. The control of the second dynamic range can be superposed on the control of the first dynamic range, as if adding a virtual "mask layer" over the original/default AMOLED display screen.

Different screen types may have different dynamic ranges of the screen display brightness. In some implementations, when an LCD display screen is adopted, because the LCD display screen generally has a lower brightness compared with a light-emitting diode (LED) display screen, the mask layer can accordingly have a different dynamic range. The mask layer can be designed with different control curves for different display screen brightness ranges. In an example, the mask layer can be realized by monitoring brightness node to change the adjusted curves, so as to achieve the effect of indirect control of the brightness of the mask layer.

The various circuits, device components, units, blocks, or portions may have modular configurations, or are composed of discrete components, but nonetheless can be referred to as "units," "modules," or "portions" in general. In other words, the "circuits," "components," "modules," "blocks," "portions," or "units" referred to herein may or may not be in modular forms, and these phrases may be interchangeably used.

It will be understood that the "plurality" in the disclosure means two or more, and other quantifiers are similar. "And/or" describes the relationship of the related objects, indicating that there may be three relationships, for example, A and/or B may indicate three cases: A exists alone, A and B exist simultaneously, and B exists alone. The character "/" generally indicates that the relationship between the contextually relevant objects is a "or" relationship. The singular forms "a," "an," and "the" are also intended to include the plural forms unless the context clearly indicates otherwise.

It will be further understood that although the terms such as "first," "second," and the like are used to describe various information, this information should not be limited by these terms. The terms are only used to distinguish the same type of information from each other, and do not indicate a specific order or importance. In fact, the expressions such as "first," "second" and the like can be used interchangeably. For instance, first information can also be referred to as second information without departing from the scope of the disclosure, and similarly, the second information can also be referred to as the first information.

It will be further understood that although the operations in the embodiments of the present disclosure are described in a specific order in the drawings, it will not be understood as requiring that the operations are performed in the specific order shown or in a serial order, or that perform all the operations shown to acquire the desired result. In certain environments, multitasking and parallel processing may be advantageous.

Those of ordinary skill in the art will understand that the above described modules/units can each be implemented by hardware, or software, or a combination of hardware and software. Those of ordinary skill in the art will also understand that multiple ones of the above described modules/units may be combined as one module/unit, and each of the above described modules/units may be further divided into a plurality of sub-modules/sub-units.

It is to be understood that the terms "lower," "upper," "center," "longitudinal," "transverse," "length," "width," "thickness," "upper," "lower," "front," "back," "left," "right," "vertical," "horizontal," "top," "bottom," "inside," "outside," "clockwise," "counter clockwise," "axial," "radial," "circumferential," "column," "row," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

In the present disclosure, the terms "installed," "connected," "coupled," "fixed" and the like shall be understood broadly, and may be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the present disclosure, a first element being "on," "over," or "below" a second element may indicate direct contact between the first and second elements, without contact, or indirect through an intermediate medium, unless otherwise explicitly stated and defined.

Moreover, a first element being "above," "over," or "at an upper surface of' a second element may indicate that the first element is directly above the second element, or merely that the first element is at a level higher than the second element. The first element "below," "underneath," or "at a lower surface of' the second element may indicate that the first element is directly below the second element, or merely that the first element is at a level lower than the second feature. The first and second elements may or may not be in contact with each other.

In the description of the present disclosure, the terms "one embodiment," "some embodiments," "example," "specific example," or "some examples," and the like may indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described may be combined in a suitable manner in any one or more embodiments or examples. In addition, various embodiments or examples described in the specification, as well as features of various embodiments or examples, may be combined and reorganized.

In some embodiments, the control and/or interface software or app can be provided in a form of a non-transitory computer-readable storage medium having instructions stored thereon is further provided. For example, the non-transitory computer-readable storage medium may be a Read-Only Memory (ROM), a Random-Access Memory (RAM), a Compact Disc Read-Only Memory (CD-ROM), a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, or in combinations of one or more of them. Implementations of the subject matter described in this disclosure can be implemented as one or more computer programs, i.e., one or more modules of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium may be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures. For example, the devices can be controlled remotely through the Internet, on a smart phone, a tablet computer or other types of computers, with a web-based graphic user interface (GUI).

A computer program (also known as a program, software, software application, app, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a mark-up language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode) display, other flexible configuration, or any other monitor for displaying information to the user and a keyboard, a pointing device, e.g., a mouse, trackball, etc., or a touch screen, touch pad, etc., by which the user can provide input to the computer.

Other types of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In an example, a user can speak commands to the audio processing device, to perform various operations.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombinations.

Moreover, although features may be described above as acting in certain combinations and even initially claimed as such, one or more features from a claimed combination can in some cases be excised from the combination, and the claimed combination may be directed to a subcombination or variations of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing may be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. A screen display adjusting method, applied to a terminal, **characterized by** the following steps:
providing (S11) a mask layer, in response to that a dark mode of the terminal is turned on; and
adjusting (S12) a screen display brightness of the terminal by adjusting a display transparency of the mask layer.

2. The screen display adjusting method according to claim 1, wherein the step of adjusting a display transparency of the mask layer comprises:
determining an illumination brightness, and determining the display transparency of the mask layer according to the illumination brightness.

3. The screen display adjusting method according to claim 2, wherein the step of determining the display transparency of the mask layer according to the illumination brightness comprises:
determining a display transparency of the mask layer corresponding to the illumination brightness, based on a corresponding relationship curve between the illumination brightness and the display transparency of the mask layer.

4. The screen display adjusting method according to claim 3, wherein the step of determining a display transparency of the mask layer corresponding to the illumination brightness, based on a corresponding relationship curve between the illumination brightness and the display transparency of the mask layer comprises:
determining (S31) a coordinate value of a point of the illumination brightness on the corresponding relationship curve, based on the corresponding relationship curve; and
determining (S32) a coordinate value of a corresponding display transparency of the mask layer, according to a coordinate value of a point of the illumination brightness on the corresponding relationship curve, the coordinate value of the display transparency of the mask layer being a display transparency of the mask layer.

5. The screen display adjusting method according to claim 4, wherein the step of determining of the corresponding relationship curve comprises:
determining (S41) a corresponding display transparency of the mask layer when the illumination brightness is 0, and determining a corresponding illumination brightness when a display transparency of the mask layer is 0; and
establishing (S42) a coordinate system, and determining a corresponding relationship curve between the illumination brightness and the display transparency of the mask layer in the coordinate system, according to the corresponding display transparency of the mask layer when the illumination brightness is 0 and the corresponding illumination brightness when the display transparency of the mask layer is 0.

6. The screen display adjusting method according to any one of claims 2 to 5, further comprising:
removing the mask layer in response to an operation instruction to turn off the dark mode, responsive to that the illumination brightness exceeds a predetermined illumination brightness threshold.

7. The screen display adjusting method y according to any one of claims 1 to 6, further comprising:
adjusting a brightness of a text based on a transparency of the mask layer responsive to that the text is displayed on a current interface of the terminal.

8. A screen display adjusting apparatus (700), applied to a terminal, **characterized by**:
a memory (704) for storing processor-executable instructions;
a processor (720) configured to:
add a mask layer in response to that a dark mode of the terminal is turned on; and
adjust a screen display brightness of the terminal by adjusting the display transparency of the mask layer.

9. The screen display adjusting apparatus according to claim 8, wherein the processor is further configured to:
determine an illumination brightness, and determine the display transparency of the mask layer according to the illumination brightness.

10. The screen display adjusting apparatus according to claim 9, wherein the processor is further configured to determine the display transparency of the mask layer by:
determining a display transparency of the mask layer corresponding to the illumination brightness, based on a corresponding relationship curve between the illumination brightness and the display transparency of the mask layer.

11. The screen display adjusting apparatus according to claim 10, wherein the processor is further configured to:
determine a coordinate value of a point of the illumination brightness on the corresponding relationship curve, based on the corresponding relationship curve; and
determine a coordinate value of a corresponding display transparency of the mask layer according to a coordinate value of a point of the illumination brightness on the corresponding relationship curve, the coordinate value of the display transparency of the mask layer being a display transparency of the mask layer.

12. The screen display adjusting apparatus according to claim 11, wherein the processor is further configured to:
determine a corresponding display transparency of the mask layer when the illumination brightness is 0, and determine a corresponding illumination brightness when a display transparency of the mask layer is 0; and
establish a coordinate system, and determine a corresponding relationship curve between the illumination brightness and the display transparency of the mask layer in the coordinate system according to a corresponding display transparency of the mask layer when the illumination brightness is 0 and a corresponding illumination brightness when a display transparency of the mask layer is 0.

13. The screen display adjusting apparatus according to any of claims 9 to 12, wherein the processor is further configured to:
remove the mask layer in response to an operation instruction to turn off the dark mode responsive to that the illumination brightness exceeds a predetermined illumination brightness threshold.

14. The screen display adjusting apparatus according to any of claims 8 to 13, wherein the processor is further configured to:
adjust a brightness of a text based on a transparency of the mask layer responsive to that the text is displayed on a current interface of the terminal.

15. A non-transitory computer-readable storage medium having stored thereon instructions for execution by a processor of a network device to perform operations of the screen display adjusting method according to any of claims 1-7.
